# EUROPEAN PATENT APPLICATION

(11) **EP 2 178 009 A1**
(43) Date of publication of application: **21.04.2010**
(21) Application number: 08166525.9
(22) Date of filing: 14.10.2008
(51) Int. Cl.: G06F 17/30

(54) **Method for filtering a webpage**

(71) Applicant: Unicaresoft Corporation B.V., 1382 MA Weesp (NL)
(72) Inventor: Ghazarian, Gérard, 1382 MA Weesp (NL); Van der Mijn, Youri Pawel, 1181 WT Amstelveen (NL); da Silva Gonçalves, Pedro Daniel, 2795-116, Linda-a-Velha (PT)
(74) Representative: Aalbers, Arnt Reinier

(57) **Abstract**

The invention provides a method for filtering a webpage by blocking access to the webpage and blocking access to an object on the webpage. Access to the webpage is blocked when a forbidden word is found in the content of the webpage. Blocking access to the object is particularly useful in case no forbidden words are found in the content of the webpage.

## Description

### FIELD OF THE INVENTION

The present invention relates to a method for filtering a webpage. The present invention further relates to a computer program for filtering a webpage. The invention further relates to a data carrier containing a computer program for filtering a webpage.

### BACKGROUND

Webpages are a resource of information, typically stored on a web server on the Internet. The information is formatted in a mark-up language such as HTML or XHTML, and may provide navigation to other webpages via hypertext links. Webpages usually include instructions as to the colors of text and backgrounds and typically contain links to images or other media to be displayed. Webpages are accessed through a web browser running on a computing device or an electronic system such as a PC, notebook, smartphone, game console or set-top box.

Parental controls allow a parent to limit what a child can see on the Internet. These controls include the blocking of webpages containing e.g. pornography, violence, weapons, drugs and/or online chatting. Several technologies are known for creating parental controls for blocking websites.

A first known technology is based on an API method and uses the operating-system application programming interface (API) to gather information about an application such as a browser or a chat application to seize control of the application when information gathered from the application triggers a positive match in a database of forbidden words.

A second known technology uses a proxy server. The web browser communicates with the proxy server while the proxy server retrieves the webpage and returns it to the web browser. Thus, the web browser does not communicate directly with the web server but through the proxy server. The proxy server analyses data from and to the web browser. If by rules of definitions the data is identified as to be blocked, then the proxy server can act like a firewall and deny the communication. An http proxy server e.g. can receive an http header request for a webpage from a web browser. The proxy server parses the uniform resource locator (URL) of the webpage and searches in a database of forbidden words or forbidden URLs. If there is a positive match the proxy server blocks the request to the remote server and may return an alternative response to the request, such as a custom "denied" page or a redirection header. The proxy server needs to be configured in the web browser and may be bypassed.

There is a need for an improved parental control technology that enables a more sophisticated filtering of webpages to allow more information accessible through webpages to be blocked.

### SUMMARY OF THE INVENTION

It is an object of the invention to provide an improved method for filtering a webpage.

According to an aspect of the invention a method is proposed for filtering a first webpage. The first webpage comprises first content data and one or more embedded tags. One or more forbidden words are stored in a memory. The method comprises the step of searching in the first content data for at least one of the forbidden words. The method further comprises the step of blocking access to the first webpage if at least one of the forbidden words is found in the first content data. The method further comprises the step of obtaining a first link to a first object from the one or more embedded tags. The method further comprises the step of analyzing at least one of the first link and the first object to obtain an analysis result. The method further comprises the step of blocking access to the first object based on the analysis result.

Thus the invention enables filtering of a first webpage by blocking access to the first webpage and blocking access to an object on the first webpage. Access to the first webpage is blocked when a forbidden word is found in the content of the first webpage. It is possible to block access to the webpage after a predefined number of forbidden words are found. Blocking access to the object on the first webpage is particularly useful in case no forbidden words are found in the content of the webpage.

The embodiment of claim 2 advantageously enables blocking of access to an object to which the webpage links by searching in a tag-embedded link for a forbidden word.

The embodiment of claim 3 advantageously enables a second webpage to which the first webpage links to be searched for forbidden words, enabling blocking of access to the second webpage on the first webpage.

The embodiment of claim 4 advantageously enables a binary file to which the first webpage links to be searched for a predefined pattern, enabling blocking of access to the binary file on the first webpage. The binary file is preferably an image file or video file, in which case access to e.g. pornographic images or videos can be blocked on the first webpage.

The embodiment of claim 5 advantageously enables a first link to be replaced by a second link, resulting in the first object being inaccessible from the first webpage.

The embodiment of claim 6 advantageously enables linking on the first webpage to a third webpage instead of the second webpage, whereby the third webpage is preferably a webpage for which the content is known to be allowed or a webpage indicating that access to the second webpage is blocked. Moreover the embodiment of claim 6 advantageously enables linking on the first webpage to a second binary file instead of the first binary file, whereby the second binary file is preferably a second image file indicating that access to the first binary file is blocked.

The embodiment of claim 7 advantageously enables the second object to be located on a known and safe web server different from the web server from which the first webpage is retrieved.

According to an aspect of the invention a computer program is proposed for filtering a first webpage. The computer program comprises software code portions adapted for, when installed on and run by a computing device or an electronic system, performing one or more of the above mentioned steps. Thus the invention advantageously enables the improved filtering of a website to be implemented in a computer environment.

According to an aspect of the invention a data carrier is proposed containing the computer program as mentioned above. Thus the invention advantageously enables distribution of the computer program for improved filtering of a website.

Hereinafter, embodiments of the invention will be described in further detail. It should be appreciated, however, that these embodiments may not be construed as limiting the scope of protection for the present invention.

### BRIEF DESCRIPTION OF THE DRAWINGS

Aspects of the invention will be explained in greater detail by reference to exemplary embodiments shown in the drawings, in which:
Fig.1 shows a schematic view of a method of an exemplary embodiment of the invention;
Fig.2 shows a schematic view of a method of an exemplary embodiment of the invention;
Fig.3 shows an Internet architecture;
Fig. 4 shows a simplified architecture of an electronic system;
Fig5A shows a webpage prior to applying a method of an exemplary embodiment of the invention;
Fig5B shows a webpage after applying a method of an exemplary embodiment of the invention.

### DETAILED DESCRIPTION OF THE DRAWINGS

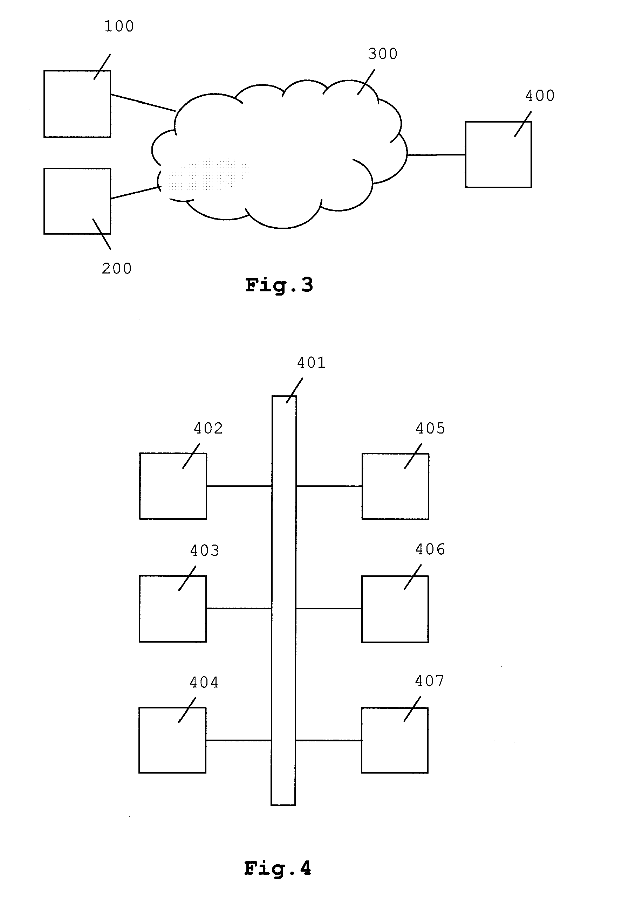

The invention is typically used in an Internet environment wherein an end-user, e.g. a child, uses a web browser on a PC or any other computing device to access information on the Internet. In Fig.3 a typical Internet architecture is shown. The end-user uses PC 400 to connect to the Internet 300. Using web browser software on the PC 400 a webpage is requested from a first external server 100, which is typically a web server. In response to the request the web server 100 returns the requested webpage to the web browser on the PC 400. To enable filtering of the requested webpage before displaying the webpage to the end-user, parental control software running on PC 400 analyzes the webpage prior to handing the webpage to the web browser.

A simplified architecture of PC 400 is shown in Fig.4. A bus 401 interconnects one or more processors 402, RAM memory 403, one or more fixed disk drives 404, network interface 405, graphical interface 406 and one or more input devices 407. Processor 402 is used for executing software code portions in the RAM memory 403. RAM memory 403 is further used for temporary storing data used by the software code portions. Fixed disk drive 404 is used for storing software code portions and data. Software code portions and data are typically read from the fixed disk drive 404 and stored in the RAM memory 403 prior to execution by the processor 402. Software code portions include e.g. web browser software and parental control software. Network interface 405 is used to connect the PC 400 to the Internet 300. Graphical interface 406 is used for displaying a graphical user interface of the web browser software and a graphical representation of the webpages on a display. Input devices 407 are used to allow the end-user to interact with the PC 400 and are e.g. a mouse and a keyboard.

To protect the end-user from accessing or viewing inappropriate information, such as information including pornography, violence, weapons, drugs and/or online chatting, parental control software filters the requested webpage prior to displaying the webpage in the web browser. Hereto the parental control software has access to a list of forbidden words stored on the fixed disk drive 404 or loaded in the memory 403. It is possible to retrieve the forbidden words from a trusted external server, such as second external server 200. The forbidden words may be categorized in categories like e.g. pornography, violence, weapons, drugs and/or online chatting, enabling words in a particular category to be allowed or disallowed through configuring a category to be used or not in the filtering process. Moreover, the parental control software has access to modules for analyzing links on the webpage and for analyzing objects to which the links refer.

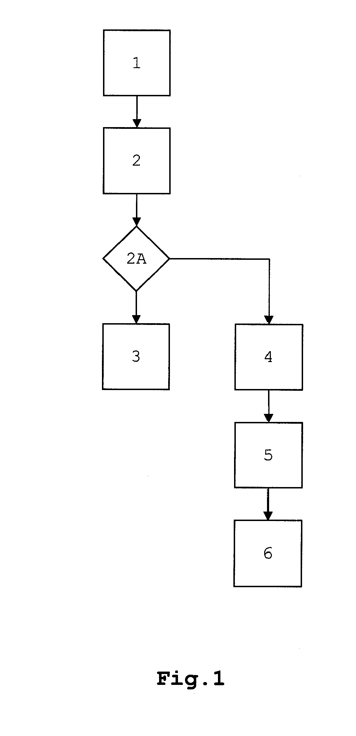

In Fig.1 steps of an exemplary embodiment of the invention are shown for filtering a webpage. The webpage is e.g. an html file named index.html stored on a web server 100 called www.webserver.com. To request the webpage, the web browser sends an HTTP GET request to the web server in accordance with the hypertext transfer protocol HTTP. The request is transmitted as data including e.g. the following information:
GET /index.html HTTP/1.1
Host: www.webserver.com

The web server 100 responds with the requested webpage by transmitting data including e.g. the following information:
HTTP/1.1 200 OK
Content-Type: text/html; charset=UTF-8

This information is followed by the html-formatted index.html file. In step 1 of Fig.1 index.html is received in PC 400 and intercepted by the parental control software before displaying index.html in the web browser.

In step 2 the parental control software starts filtering index.html by searching for forbidden words in the content of the index.html file. The content is typically the part of index.html in-between tags, but may include data within the tags itself. The parental control software can be configured to allow a predefined number of forbidden words before deciding to block access to the webpage. Alternatively the parental control software is configured not to allow any forbidden words on the webpage.

If more than the maximum number of allowed forbidden words is found, the parental control software blocks access to the webpage. This is indicated by step 2A wherein it is detected whether or not the maximum number of forbidden words is found, and step 3 wherein access to index.html is blocked. When access to index.html is blocked, the parental control software ensures that the web browser does not receive the webpage. Hereto the parental control software e.g. redirects the web browser to another webpage on the Internet or stored on the fixed disk drive 400. The other webpage to which the web browser is redirected can be used to inform the end-user that access to index.html on www.webserver.com is blocked.

If the entire content of index.html is searched and no forbidden words are found, then links and objects included on the webpage are analyzed. An object is typically included on the webpage by reference via a link. Examples of objects are webpages, image files and video files. In step 4 the links are obtained from index.html by finding tags related to linking to objects. Each link and object is analyzed in step 5 and if a non-allowed link is found, access to the object is blocked in step 6. As a result index.html will be displayed in the web browser without access to or displaying the blocked objects.

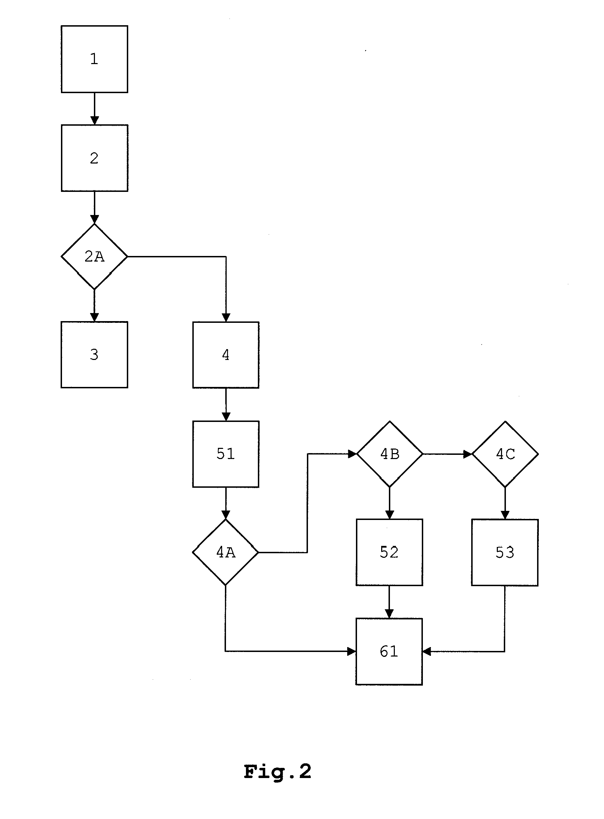

Fig.2 shows exemplary embodiments of the invention, wherein various steps for analyzing links and objects are shown. In step 51 for each link the URL to the object is searched for forbidden words. If a forbidden word is found in the URL, then access to the object is blocked in step 61 by replacing the URL with another URL. The following tag is e.g. a link to an image file called seximage.png on the web server 100 called www.webserver.com:
<IMG src="http://www.webserver.com/seximage.png">

If "sex" is a forbidden word, then the URL http://www.webserver.com/seximage.png contains the forbidden word and access to the image is blocked. Hereto the URL is replaced with an URL to a predefined and safe image. The predefined image is preferably stored on a second web server 200, but may alternatively be stored on the fixed disk drive 404. The blocked IMG tag shown above is e.g. replaced by a tag with a link to an image file called safeimage.png on web server 200 called www.safewebserver.com:
<IMG src="http://www.safewebserver.com/safeimage.png">

Step 4A indicates the decision whether or not to block the link based on the analysis in step 51. If the link is not blocked after step 51, then in step 4B it is detected if the object is a second webpage. A webpage object is e.g. detected by finding a HTML A tag in index.html. The following example is a link to a second webpage called secondwebpage.html:
<A href="http://www.webserver.com/secondwebpage.html">

In step 52 secondwebpage.html is requested using the HTTP GET method and received in the parental control software. The content of secondwebpage.html is searched for forbidden words. If more than the maximum number of allowed forbidden words is found, the parental control software blocks access to secondwebwebpage.html. Hereto the URL to the second webpage is replaced with an URL to a third webpage, which is a predefined and safe webpage. The predefined webpage is preferably stored on the second web server 200, but may alternatively be stored on the fixed disk drive 404. The blocked A tag shown above is e.g. replaced by a tag with a link to a third webpage called safepage.html on web server 200 called www.safewebserver.com:
<A href="http://www.safewebserver.com/safepage.html">

In step 4C it is detected if the object to which the link refers is a binary file, e.g. an image file or a video file. The binary file is e.g. detected by finding an HTML IMG tag in index.html. The following example is a link to an image file called image.png:
<IMG src="http://www.webserver.com/image.png">

In step 53 image.png is requested using the HTTP GET method and received in the parental control software. The image data is searched for one or more predefined patterns. Commercially available software or available open source software is used for searching the image data for predefined patterns. The software is capable of detecting e.g. naked skin patterns in the image file or in a video file. More sophisticated software can be used to detect shapes of objects in the image file or video file, such as e.g. the shape of a weapon. If the predefined patterns are found, the parental control software blocks access to image.png. Hereto the URL to the image file is replaced with an URL to a predefined and safe image file. The predefined image file is preferably stored on the second web server 200, but may alternatively be stored on the fixed disk drive 404. The blocked IMG tag shown above is e.g. replaced by a tag with a link to an image file called safeimage.png on web server 200 called www.safewebserver.com:
<IMG src="http://www.safewebserver.com/safeimage.png">

It is possible to use step 53 to search in the linked objects for viruses, spyware and malware. The software used to search for predefined patterns is in this case commercially available anti-virus software or available open source anti-virus software. If a virus, spyware of malware is detected, the link to the binary file is replaced by a link to e.g. safeimage.png or safepage.html as indicated above.

It is possible to filter a webpage in another order of steps than shown in Fig.1 and Fig.2. Step 4 e.g. can be performed prior to step 2 and steps 51, 52 and 53 can be performed in any order.

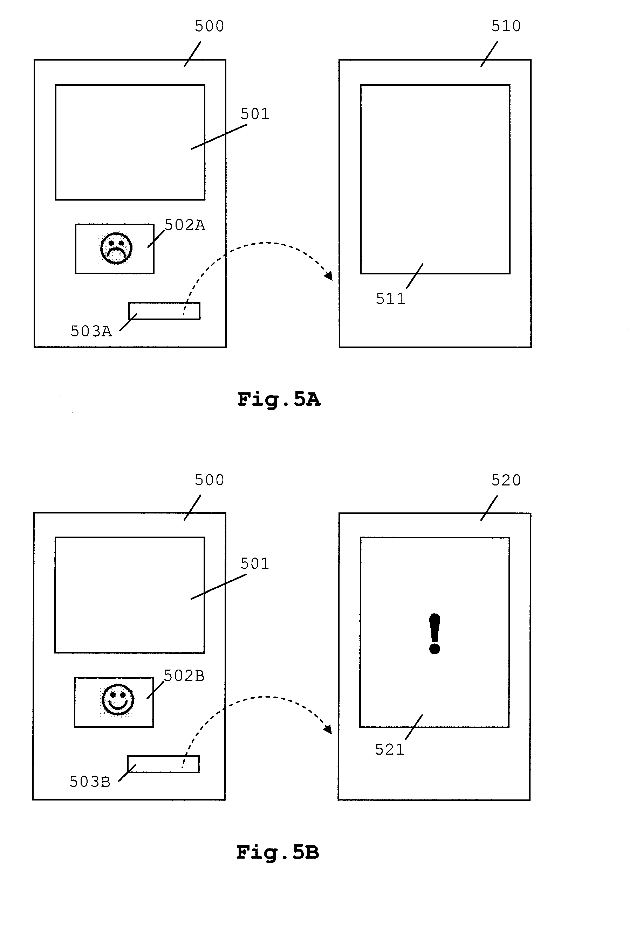

In Fig.5A an example of first webpage 500 is shown as it would be displayed in a web browser without filtering. First webpage 500 contains first content data 501, an image file 502A called seximage.png and a link 503A to a second webpage 510. The second webpage 510 contains second content data 511. The first webpage is e.g. defined by the following html code:
<HTML>
<HEAD>
<TITLE>This is a first webpage</TITLE>
</HEAD>
<BODY>
<P>This first webpage shows some text, an image and a link to a second webpage.</P>
<IMG src="http://www.webserver.com/seximage.png">
<A href="http://www.webserver.com/secondwebpage.html">
</BODY>
</HTML>

The second webpage is e.g. defined by the following html code:
<HTML>
<HEAD>
<TITLE>This is a second webpage</TITLE>
</HEAD>
<BODY>
<P>This second webpage shows forbidden words in the text, such as sex or guns.</P>
</BODY>
</HTML>

After filtering the webpage 500 is displayed in the web browser as shown in Fig.5B. In Fig.5B the first content data 501 is displayed unaltered, as no forbidden words are found in the first content data. The link to the image file seximage.png 502A is filtered based on the word sex in the URL of the IMG tag, resulting in the IMG tag being replaced by a tag with a link to an image file called safeimage.png on www.safewebserver.com. The image file safeimage.png 502B is displayed in the web browser. The link 503A to the second webpage 510 is filtered based on the existence of forbidden words in the second content data 511. As a result the link is replaced by a link to a third webpage 520 called safepage.html on web server 200 called www.safewebserver.com. The third webpage safepage.html 520 is known to contain safe content data 521, e.g. including a warning message about the blocked second webpage. The filtered webpage is thus defined by the following html code:
<HTML>
<HEAD>
<TITLE>This is a first webpage</TITLE>
</HEAD>
<BODY>
<P>This first webpage shows some text, an image and a link to a second webpage.</P>
<IMG src="http://www.safewebserver.com/safeimage.png">
<A href="http://www.safewebserver.com/safepage.html">
</BODY>
</HTML>

In the shown examples access to an object is blocked by replacing the link to the object with a link to a safe object of a similar kind. It is possible to replace the link by a link to a safe object of another kind. A HTML A tag with a link to a second webpage can e.g. be replaced by an IMG tag with a link to a safe image file or an OBJECT tag with a link to a safe video file, and vice versa. Alternatively access can be blocked by removing the link to the object or removing the HTML tag containing the link.

The tags shown in the examples are not to be construed as limiting the invention. A link to a second webpage can e.g. be detected in an IMG tag incorporating an ONCLICK event. The following IMG tag is e.g. both a link to an image file (for displaying the image file in the web browser) and a link to a second webpage called secondwebpage.html (for browsing to the second webpage upon clicking on the image):
<IMG src="http://www.webserver.com/image.png" ONCLICK="document.href=
http://www.webserver.com/secondwebpage.html">

Links to objects can be found in any HTML tag. Moreover, the invention is not limited to filtering webpages formatted in HTML. Webpages formatted in any mark-up language can be filtered.

Searching of predefined patterns in binary files is not limited to the binary files of the shown examples. Image files and video files can be in any format, and other binary files such as executable programs or sound files can be analyzed.

The invention is typically implemented as a computer program such as parental control software. After installing the computer program on PC 400, preferably all incoming webpages are intercepted and filtered by the computer program before delivering the filtered webpages to the software requesting the webpages. The software requesting the webpages can be any software capable of receiving webpages and is not limited to web browsers. E.g. chatting software, gaming software and even word processing software are capable of receiving webpages from the internet, which webpages can be filtered by the computer program.

The invention provides for a data carrier containing the computer program implementing the invention. The data carrier is e.g. a CD-ROM, DVD-ROM, memory card, USB stick, or any other data carrier readable by a computing device.

## Claims

1. A method for filtering a first webpage in a computing device having access to a memory with one or more forbidden words, the first webpage comprising first content data and one or more embedded tags, the method comprising the steps of:
searching in the first content data for at least one of the forbidden words and blocking access to the first webpage if the at least one of the forbidden words is found in the first content data;
obtaining a first link to a first object from the one or more embedded tags; and
analyzing at least one of the first link and the first object to obtain an analysis result and blocking access to the first object based on the analysis result.

2. The method according to claim 1, wherein the step of analyzing the first link comprises the step of searching in the first link for at least one of the forbidden words, and wherein the analysis result provides an indication that the at least one of the forbidden words is found in the first link.

3. The method according to claim 1 or 2, wherein the first object is a second webpage comprising second content data, wherein the step of analyzing the first object comprises the step of searching in the second content data for at least one of the forbidden words, and wherein the analysis result provides an indication that the at least one of the forbidden words is found in the second content data.

4. The method according to claim 1 or 2, wherein the first object is a first binary file, preferably a first image file or a video file, wherein the step of analyzing the first object comprises the step of searching for one or more predefined patterns in or of the first binary file, and wherein the analysis result provides an indication that the one or more predefined patterns are found in or for the first binary file.

5. The method according to any one of the claims 1-4, wherein the step of blocking access to the first object comprises the step of replacing the first link with a second link to a second object.

6. The method according to claim 5, wherein the second object is a third webpage or a second binary file, the second binary file preferably being a second image file.

7. The method according to claim 5 or 6, further comprising the step of retrieving the first webpage from a first external server, and wherein the second object is located on a second external server.

8. A computer program for filtering a first webpage comprising software code portions adapted for, when installed on and run by a computing device, performing the method according to one or more of the claims 1-7.

9. A data carrier containing the computer program of claim 8.
